# EUROPÄISCHE PATENTANMELDUNG

(11) **EP 2 549 622 A1**
(43) Veröffentlichungstag der Anmeldung: **23.01.2013**
(21) Anmeldenummer: 11175048.5
(22) Anmeldetag: 22.07.2011
(51) Int. Cl.: H02K 1/14, H02K 3/52, H02K 15/06

(54) **Elektrische Maschine mit einem Wirkelement mit aufgeweiteten Zähnen**

(71) Anmelder: Siemens Aktiengesellschaft, 80333 München (DE)
(72) Erfinder: Bähr, Hubertus, 97631 Bad Königshofen (DE)

(57) **Zusammenfassung**

Ein magnetisch wirksames Basiselement (3) eines Wirkelements (1) einer elektrischen Maschine weist eine Anzahl von Zähnen (4) aufweist, die jeweils zwei äußere Zahnflanken (5) und zwischen den äußeren Zahnflanken (5) jeweils eine V-förmige Rinne (6) aufweisen. Auf mechanisch stabile Spulenträger (7) ist jeweils ein Spulenelement (9) der elektrischen Maschine gewickelt. Die Spulenträger (7) einschließlich der auf die Spulenträger (7) gewickelten Spulenelemente (9) sind jeweils auf einen der Zähne (4) des Basiselements (3) aufgesteckt. In die Rinnen (6) ist jeweils ein Aufweitelement (10) eingepresst. Die Zähne (4) sind dadurch aufgeweitet, so dass die äußeren Zahnflanken (5) der Zähne (4) an den Zähnen zugewandten Innenseiten (8) der Spulenträger (7) anliegen.

## Beschreibung

Die vorliegende Erfindung betrifft ein Herstellungsverfahren für ein Wirkelement einer elektrischen Maschine,
- wobei ein magnetisch wirksames Basiselement des Wirkelements eine Anzahl von Zähnen aufweist, die jeweils zwei äußere Zahnflanken aufweisen,
- wobei auf mechanisch stabile Spulenträger jeweils ein Spulenelement der elektrischen Maschine gewickelt wird,
- wobei die Spulenträger einschließlich der auf die Spulenträger gewickelten Spulenelemente jeweils auf einen der Zähne des Basiselements aufgesteckt werden.

Die vorliegende Erfindung betrifft weiterhin eine elektrische Maschine,
- wobei die elektrische Maschine zwei miteinander zusammenwirkende Wirkelemente aufweist,
- wobei ein magnetisch wirksames Basiselement eines der Wirkelemente eine Anzahl von Zähnen aufweist, die jeweils zwei äußere Zahnflanken aufweisen,
- wobei auf mechanisch stabile Spulenträger jeweils ein Spulenelement der elektrischen Maschine gewickelt ist,
- wobei die Spulenträger einschließlich der auf die Spulenträger gewickelten Spulenelemente jeweils auf einen der Zähne des Basiselements aufgesteckt sind.

Derartige Herstellungsverfahren und derartige elektrische Maschinen sind allgemein bekannt.

Bei elektrischen Maschinen mit Einzelzahnwicklungen (d.h. jede Wicklung umschließt nur einen Zahn) sind Spulenträger aus Kunststoff zur Isolation und zum Fixieren der Wicklung (d.h. des Spulenelements) von Vorteil. Derartige Spulenträger sind stabil im Sinne der vorliegenden Erfindung. Sie können außerhalb des Wirkelements der elektrischen Maschine bewickelt werden. Dadurch kann ein hoher Füllfaktor erreicht werden, was für die Ausnutzung der elektrischen Maschine von Vorteil ist. Bei einem Herstellen der Wicklung außerhalb der elektrischen Maschine ist weiterhin ein höherer Automatisierungsgrad einfacher realisierbar. Problematisch ist bei diesem Aufbaukonzept jedoch die Abfuhr der während des Betriebs der elektrischen Maschine in der Kupferwicklung auftretenden elektrischen Verluste. Diese Wärme muss von der Wicklung über den Spulenträger in das Wirkelement abgeleitet werden. Der Wärmeleitweg wird durch relativ große Wandstärken der Spulenträger und durch toleranz- und prozessbedingte Luftspalte zwischen Spulenträger und Wirkelement negativ beeinflusst.

Im Stand der Technik ist bekannt, den hohen Wärmeübergangswiderstand der Luftspalte dadurch zu verkleinern, dass die Luftspalte mit einem Tränk- oder Gießharz geschlossen werden. Dadurch wird der Wärmeleitwiderstand bereits deutlich verringert. Alternativ ist bekannt, die Isolation zwischen dem Wirkelement und dem Spulenelement mehrteilig auszuführen. In diesem Fall bestehen nur die Enden der Spulenträger aus Kunststoff. Der Nutbereich, welcher direkt am Blechpaket anliegt, besteht aus dünnwandigem, zum Spulenkörperende hin überlappendem Flächenisolierstoff. Da derartige Ausgestaltungen nicht stabil sind, sind diese Ausgestaltungen ist jedoch nur dann realisierbar, wenn das Wickeln direkt auf dem Wirkelement erfolgt. Weiterhin ist der Flächenisolierstoff weniger spannungsfest als der Kunststoff des Spulenkörpers.

Die Aufgabe der vorliegenden Erfindung besteht darin, Möglichkeiten zu schaffen, mittels derer bei einer elektrischen Maschine eine gute Wärmeabfuhr von dem Spulenelement auf das Wirkelement möglich ist, obwohl die Spulenelemente auf mechanisch stabile Spulenträger gewickelt sind.

Die Aufgabe wird durch ein Herstellungsverfahren mit den Merkmalen des Anspruchs 1 gelöst. Vorteilhafte Ausgestaltungen des erfindungsgemäßen Herstellungsverfahrens sind Gegenstand der abhängigen Ansprüche 2 bis 8.

Erfindungsgemäß ist bei einem Herstellungsverfahren der eingangs genannten Art vorgesehen,
- dass die Zähne zwischen den äußeren Zahnflanken jeweils eine V-förmige Rinne aufweisen und
- dass in die Rinnen jeweils ein Aufweitelement eingepresst wird und die Zähne dadurch aufgeweitet werden, so dass die äußeren Zahnflanken der Zähne sich an den Zähnen zugewandte Innenseiten der Spulenträger anlegen.

Die Zahnform kann nach Bedarf gewählt sein. Vorzugsweise laufen die Zähne vor dem Aufweiten nach oben hin konisch aufeinander zu.

In analoger Weise kann auch der Verlauf der den Zähnen zugewandten Innenseiten der Spulenträger nach Bedarf bestimmt sein. Vorzugsweise verlaufen die Innenseiten der Spulenträger parallel zueinander.

Vorzugsweise werden die Aufweitelemente in einer Längsrichtung der Rinnen in die Rinnen eingepresst. Dadurch ist die Herstellung des Wirkelements besonders einfach.

Vorzugsweise ist vorgesehen, dass die Zähne auf dem Basiselement kreisförmig um eine Symmetrieachse des Wirkelements herum verteilt angeordnet sind und dass die Rinnen parallel zur Symmetrieachse verlaufen.

In diesem Fall ist es zum einen möglich, dass die Aufweitelemente für alle Zähne auf einem gemeinsamen Ergänzungselement des Wirkelements angeordnet sind und dass die in Bezug auf die Symmetrieachse radial inneren Enden der Aufweitelemente von der Symmetrieachse einen größeren Abstand aufweisen als die in Bezug auf die Symmetrieachse radial äußeren Enden der Spulenträger. Zum anderen ist es möglich, dass die Aufweitelemente mittels eines die Symmetrieachse radial umgebenden Abschlusselements des Wirkelements in die Rinnen der Zähne eingepresst werden. Durch beide Ausgestaltungen vereinfacht sich die mechanische Konstruktion des Wirkelements.

Das Wirkelement kann als Läufer oder Rotor der elektrischen Maschine ausgebildet sein. In der Regel ist das Wirkelement jedoch als Stator der elektrischen Maschine ausgebildet.

Die Aufgabe wird weiterhin durch eine elektrische Maschine mit den Merkmalen des Anspruchs 9 gelöst. Vorteilhafte Ausgestaltungen der erfindungsgemäßen elektrischen Maschine sind Gegenstand der abhängigen Ansprüche 10 bis 14.

Erfindungsgemäß ist bei einer elektrischen Maschine der eingangs genannten Art vorgesehen,
- dass die Zähne zwischen den äußeren Zahnflanken jeweils eine V-förmige Rinne aufweisen,
- dass in die Rinnen jeweils ein Aufweitelement eingepresst ist, durch das die Zähne aufgeweitet sind, und
- dass die äußeren Zahnflanken der Zähne an den Zähnen zugewandten Innenseiten der Spulenträger anliegen.

Die vorteilhaften Ausgestaltungen der elektrischen Maschine entsprechen im Wesentlichen denen des erfindungsgemäßen Herstellungsverfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen
- FIG 1: eine elektrische Maschine,
- FIG 2: einen Schnitt durch den Stator der elektrischen Maschine von FIG 1,
- FIG 3: eine perspektivische Darstellung eines Wirkelements,
- FIG 4: einen einzelnen Zahn mit einem auf den Zahn aufgesteckten Spulenträger,
- FIG 5: ein Ablaufdiagramm,
- FIG 6 bis 8: drei Schnitte eines Spulenträgers,
- FIG 9 und 10: einen Zahn und einen Spulenträger vor dem Aufstecken des Spulenträgers auf den Zahn,
- FIG 11 und 12: den Zahn und den Spulenträger von FIG 9 bzw. FIG 10 nach dem Aufstecken, aber vor dem Einpressen eines Aufweitelements,
- FIG 13: einen Aufpressvorgang und
- FIG 14: den Zahn und den Spulenträger von FIG 9 und 11 nach dem Einpressen des Aufweitelements.

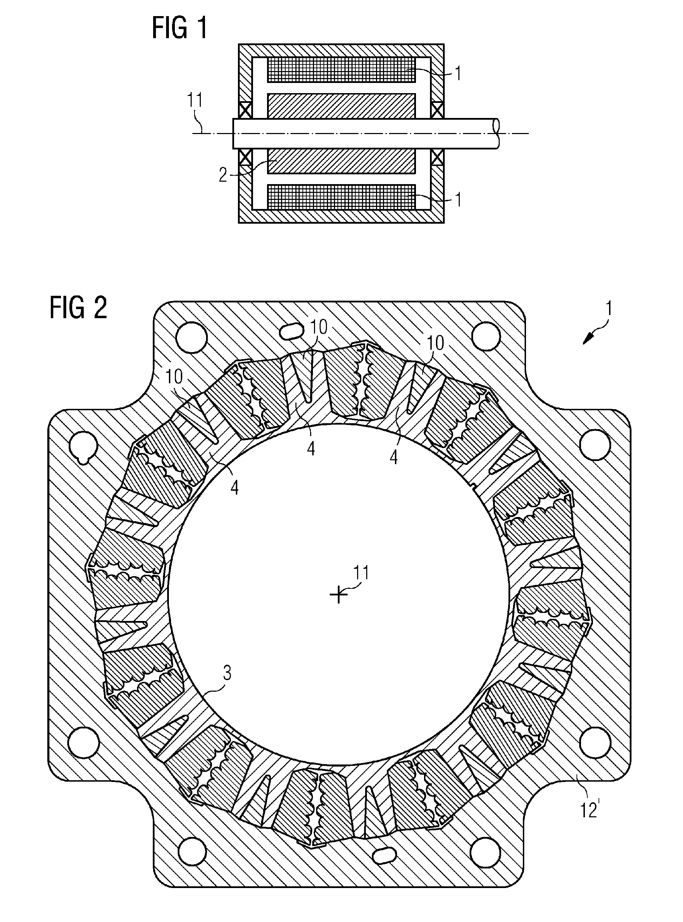

Gemäß FIG 1 weist eine elektrische Maschine zwei miteinander zusammenwirkende Wirkelemente 1, 2 auf. Je eines der Wirkelemente 1, 2 ist der Stator 1 und der Läufer 2 der elektrischen Maschine. Im Falle einer rotatorisch arbeitenden elektrischen Maschine ist der Läufer 2 der Rotor der elektrischen Maschine.

Mindestens eines der Wirkelemente 1, 2 der elektrischen Maschine ist auf erfindungsgemäße Weise ausgestaltet. Nachfolgend wird angenommen, dass das erfindungsgemäß ausgestaltete Wirkelement 1 der Stator 1 ist. Prinzipiell ist eine erfindungsgemäße Ausgestaltung jedoch ebenso beim Läufer 2 möglich, sei es alternativ, sei es zusätzlich zur erfindungsgemäßen Ausgestaltung des Stators 1.

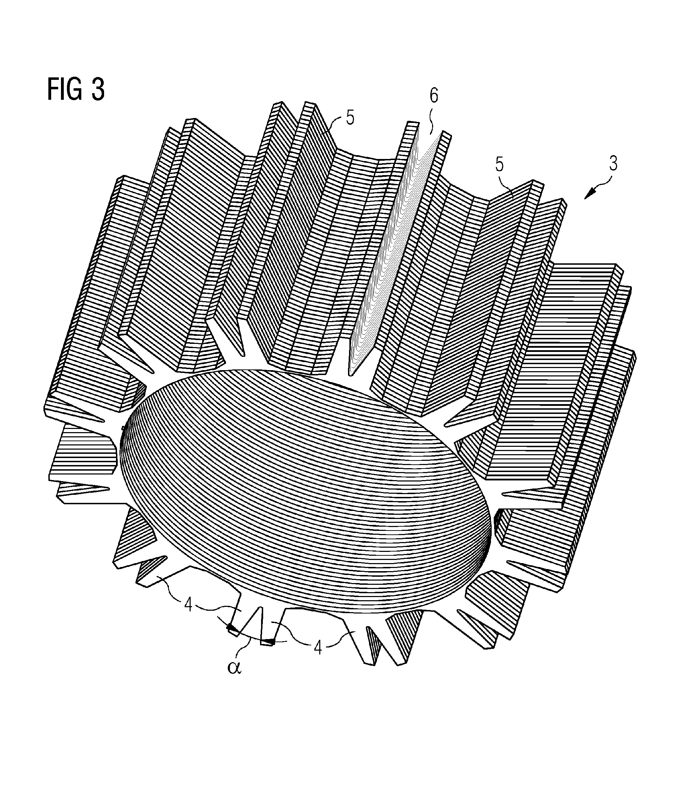

Gemäß den FIG 2 und 3 weist das erfindungsgemäß ausgestaltete Wirkelement 1 ein Basiselement 3 auf. Das Basiselement 3 ist magnetisch wirksam. Es kann beispielsweise einen Teil des Statorblechpakets bilden. Das Basiselement 3 weist eine Anzahl von Zähnen 4 auf. Die Zähne 4 weisen jeweils zwei äußere Zahnflanken 5 und zwischen den jeweiligen äußeren Zahnflanken 5 jeweils eine V-förmige Rinne 6 auf.

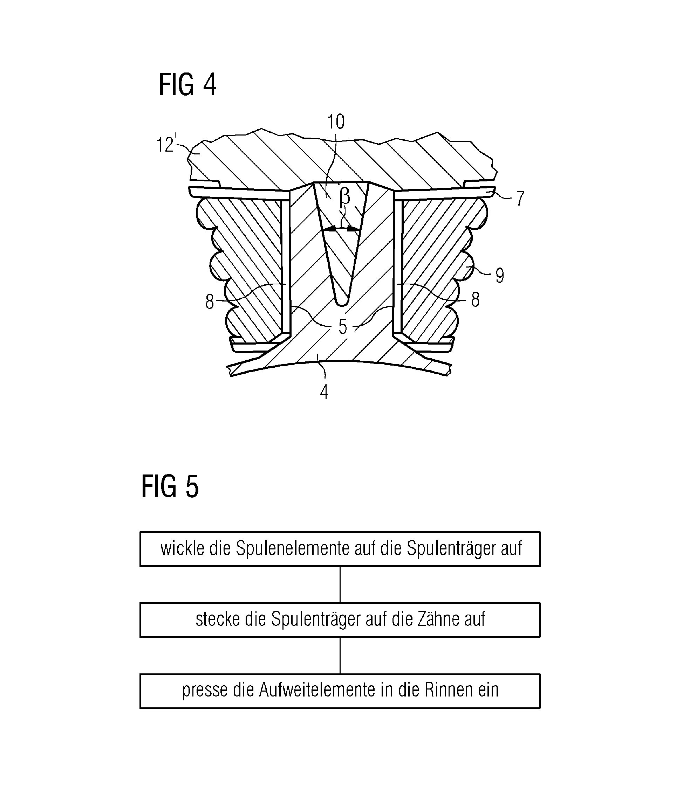

Auf jeweils einen der Zähne 4 des Basiselements 3 ist gemäß FIG 4 jeweils ein Spulenträger 7 aufgesteckt. Die Spulenträger 7 weisen Innenseiten 8 auf, die den äußeren Zahnflanken 5 zugewandt sind. Auf die Spulenträger 7 ist jeweils ein Spulenelement 9 (= Wicklung 9) gewickelt.

Die Spulenträger 7 bestehen aus Kunststoff. Sie sind mechanisch stabil, d.h. sie sind eigenstabil und sie können mit der Wicklung 9 bewickelt werden, obwohl sie noch nicht auf die Zähne 4 aufgesteckt sind.

In die Rinnen 6 der Zähne 4 ist jeweils ein Aufweitelement 10 eingepresst. Durch das Einpressen der Aufweitelemente 10 in die Rinnen 6 der Zähne 4 sind die Zähne 4 elastisch oder plastisch aufgeweitet. Dadurch liegen die äußeren Zahnflächen 5 der Zähne 4 an den Innenseiten 8 der Spulenträger 7 an.

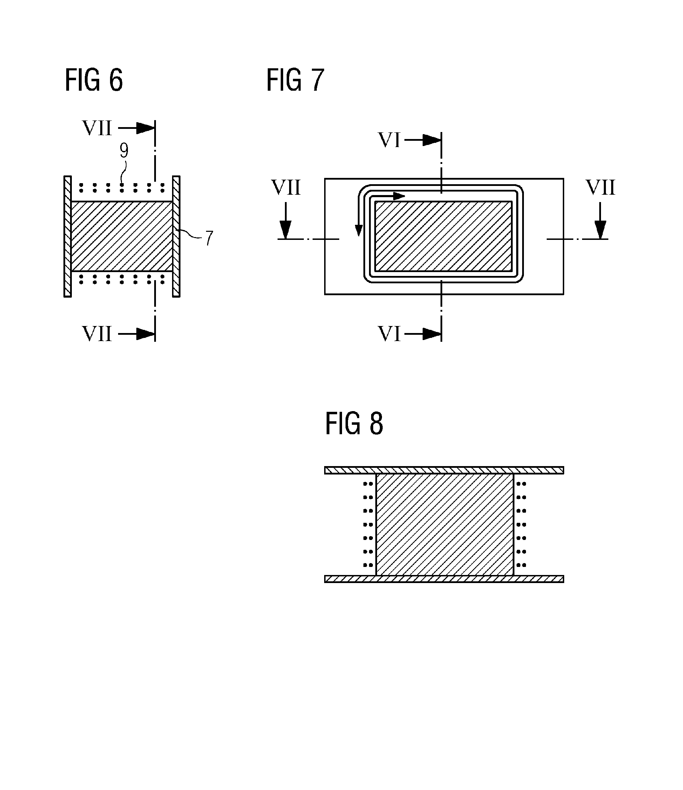

Zum Herstellen des erfindungsgemäß ausgestalteten Wirkelements 1 wird gemäß FIG 5 zunächst auf die Spulenträger 7 jeweils das entsprechende Spulenelement 9 der elektrischen Maschine gewickelt. Die FIG 6 bis 8 zeigen schematisch einen derartigen Spulenträger 7 einschließlich des auf den Spulenträger 7 gewickelten Spulenelements 9. Sodann werden die Spulenträger 7 (einschließlich der auf die Spulenträger 7 gewickelten Spulenelemente 9) gemäß den FIG 5, 9 und 10 jeweils auf den entsprechenden Zahn 4 des Basiselements 3 aufgesteckt.

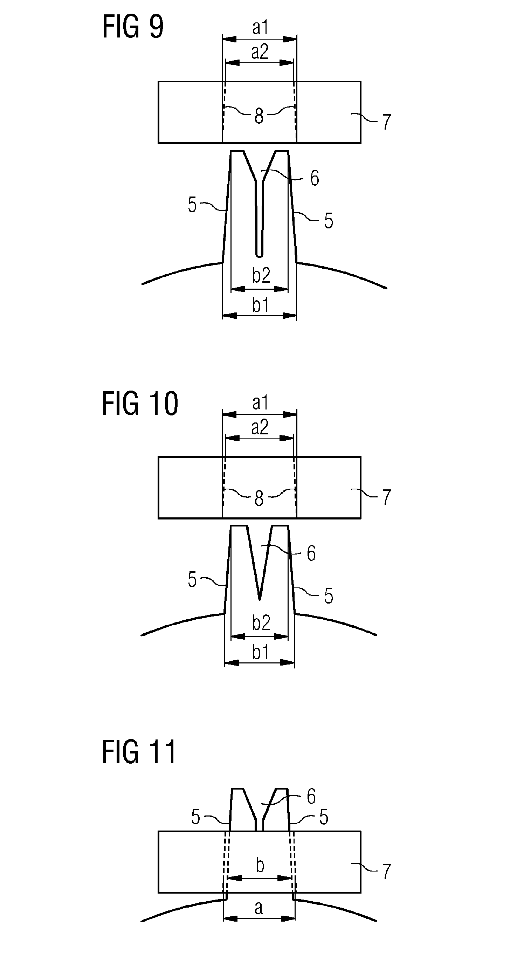

FIG 9 und 10 zeigen jeweils einen der Zähne 4 des Basiselements 3 und den entsprechenden Spulenträger 7 vor dem Aufstecken des Spulenträgers 7 auf den entsprechenden Zahn 4. Der Unterschied zwischen den FIG 9 und 10 besteht darin, dass die Rinne 6 des Zahns 4 bei der Ausgestaltung von FIG 9 oberhalb des Spulenträgers 7 endet, während sie bei der Ausgestaltung von FIG 10 in den Bereich des Spulenträgers 7 hineinragt oder sogar darüber hinaus ragt.

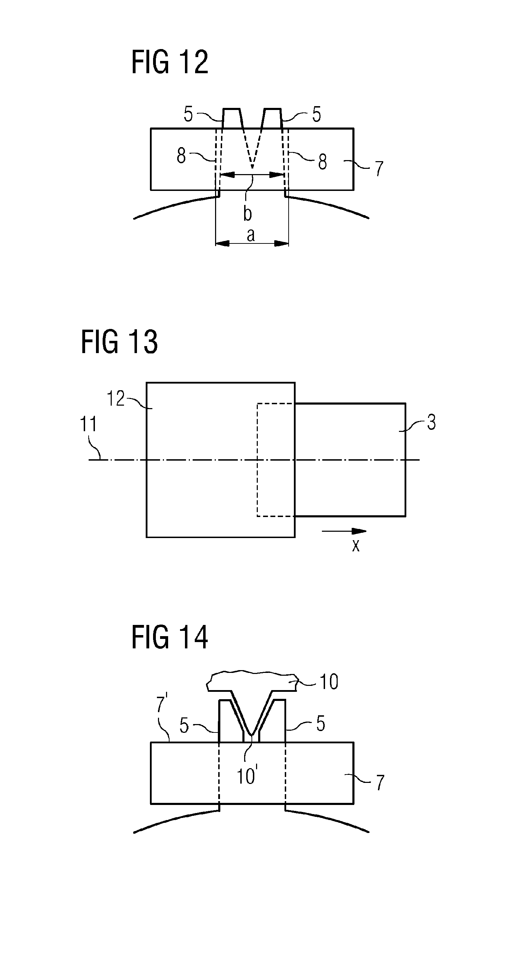

FIG 11 und 12 zeigen den entsprechenden Zustand nach dem Aufstecken des Spulenträgers 7 auf den entsprechenden Zahn 4, aber vor dem Einpressen des Aufweitelements 10.

Nach dem Aufstecken des Spulenträgers 7 auf den entsprechenden Zahn 4 und vor dem Einpressen des Aufweitelements 10 in die Rinne 6 des entsprechenden Zahns 4 sind folgende Bedingungen erfüllt:
- Der Zahn 4 weist an seinem Fuß eine Breite b1 auf, die mindestens so groß wie die Breite b2 des Zahns 4 an seinem oberen Ende ist.
- Die Innenseiten 8 der Spulenträger 7 weisen an ihren unteren Enden einen Abstand a1 auf, der mindestens so groß wie der Abstand a2 an den oberen Enden der Spulenträger 7 ist.
- Die Differenz des Abstands a der Innenseiten 8 und der Breite b des Zahns 4 steigt monoton - vorzugsweise sogar streng monoton - mit der Höhenposition an, auf den der jeweilige Abstand a und die jeweilige Breite b bezogen sind.

Die genannten Bedingungen können beispielsweise dadurch erfüllt werden, dass die Zähne 4 entsprechend der Darstellung der FIG 9 bis 12 vor dem Aufweiten nach oben hin konisch aufeinander zulaufen, während die den Zähnen 4 zugewandten Innenseiten 8 der Spulenträger 7 parallel zueinander verlaufen.

Sodann wird gemäß FIG 5 in die Rinnen 6 jeweils das Aufweitelement 10 eingepresst. Das Einpressen kann beispielsweise gemäß FIG 13 dadurch erfolgen, dass die Aufweitelemente 10 in einer Längsrichtung x der Rinnen 6 in die Rinnen 6 eingepresst werden. Diese Vorgehensweise ist insbesondere dann von Vorteil, wenn - wie aus den FIG 2 und 3 ersichtlich - die Zähne 4 auf dem Basiselement 3 kreisförmig um eine Symmetrieachse 11 des Wirkelements 1 herum verteilt angeordnet sind. In diesem Fall verlaufen die Rinnen 6 in der Regel parallel zur Symmetrieachse 11.

Die Aufweitelemente 10 können in diesem Fall gemäß FIG 13 für alle Zähne 4 auf einem gemeinsamen Ergänzungselement 12 des Wirkelements 1 angeordnet sein. Das Ergänzungselement 12 kann das Basiselement 3 in diesem Fall insbesondere radial außen umgeben. Das Basiselement 3 und das Ergänzungselement 12 können somit einem sogenannten Stern und einem sogenannten Joch eines Stern-Joch-Pakets entsprechen. Bei dieser Ausgestaltung müssen die Zähne 4 und die Spulenträger 7 entsprechend der Ausgestaltung der FIG 9 und 11 aufeinander abgestimmt sein. Demzufolge weisen die in Bezug auf die Symmetrieachse 11 radial inneren Enden 10' der Aufweitelemente 10 von der Symmetrieachse 11 einen größeren Abstand auf als die in Bezug auf die Symmetrieachse 11 radial äußeren Enden 7' der Spulenträger 7.

Alternativ können die Aufweitelemente 10 - siehe insbesondere FIG 2 - mittels eines die Symmetrieachse 11 radial umgebenden Abschlusselements 12' des Wirkelements 1 in die Rinnen 6 der Zähne 4 eingepresst sein. In diesem Fall können die Aufweitelemente 10 sich - entsprechend der Ausgestaltung der Rinne 6 in den FIG 10 und 12 - bis in den Bereich der Spulenträger 7 und ggf. sogar darüber hinaus erstrecken.

Das Aufweitelement 10 ist - analog zu der jeweiligen Rinne 6 - V-förmig ausgebildet. Es erweitert sich jedoch nach oben zu geringfügig schneller als die jeweilige Rinne 6. Wenn beispielsweise die Rinnen 6 einen Öffnungswinkel α aufweisen, weisen die Aufweitelemente 10 einen Keilwinkel β auf, der geringfügig größer als der Öffnungswinkel α ist, beispielsweise 0,3° bis 2,0° größer.

Durch das Einpressen des jeweiligen Aufweitelements 10 in die Rinne 6 des jeweiligen Zahns 4 wird der jeweilige Zahn 4 elastisch oder plastisch aufgeweitet. Dadurch legen sich die äußeren Zahnflanken 5 des jeweiligen Zahns 4 an die Innenseiten 8 des jeweiligen Spulenträgers 7 an. FIG 14 zeigt einen derartigen Zahn 4 nach dem Aufweiten. Gemäß FIG 14 liegen die äußeren Zahnflanken 5 bündig oder - besonders bevorzugt - mit leichter Pressung an den Innenseiten 8 des jeweiligen Spulenträgers 7 an. Die Form des Spulenträgers 7 wird hingegen nicht verändert. Auch nach dem Aufweiten der Zähne 4 verlaufen so die den Zähnen 4 zugewandten Innenseiten 8 der Spulenträger 7 parallel zueinander, sofern sie vor dem Aufweiten parallel zueinander verlaufen sind.

Die vorliegende Erfindung weist viele Vorteile auf. Insbesondere ist sie einfach zu realisieren und bewirkt eine gute Anbindung der Spulenträger 7 an den entsprechenden Zahn 4. Im Falle einer Ausgestaltung des Wirkelements 1 als Stern-Joch-Paket ergibt sich weiterhin ein verbesserter Wärmeübergang vom Stern (= Basiselement 3) auf das Joch (= Ergänzungselement 12 bzw. Abschlusselement 12').

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für ein Wirkelement (1) einer elektrischen Maschine,
- wobei ein magnetisch wirksames Basiselement (3) des Wirkelements (1) eine Anzahl von Zähnen (4) aufweist, die jeweils zwei äußere Zahnflanken (5) und zwischen den äußeren Zahnflanken (5) jeweils eine V-förmige Rinne (6) aufweisen,
- wobei auf mechanisch stabile Spulenträger (7) jeweils ein Spulenelement (9) der elektrischen Maschine gewickelt wird,
- wobei die Spulenträger (7) einschließlich der auf die Spulenträger (7) gewickelten Spulenelemente (9) jeweils auf einen der Zähne (4) des Basiselements (3) aufgesteckt werden,
- wobei in die Rinnen (6) jeweils ein Aufweitelement (10) eingepresst wird und die Zähne (4) dadurch aufgeweitet werden, so dass die äußeren Zahnflanken (5) der Zähne (4) sich an den Zähnen zugewandte Innenseiten (8) der Spulenträger (7) anlegen.

2. Herstellungsverfahren nach Anspruch 1, **dadurch gekennzeichnet , dass** die Zähne (4) vor dem Aufweiten nach oben hin konisch aufeinander zulaufen.

3. Herstellungsverfahren nach Anspruch 1 oder 2, **da - durch gekennzeichnet** , dass die den Zähnen (4) zugewandten Innenseiten (8) der Spulenträger (7) parallel zueinander verlaufen.

4. Herstellungsverfahren nach Anspruch 1, 2 oder 3, **da** - **durch gekennzeichnet** , dass die Aufweitelemente (10) in einer Längsrichtung (x) der Rinnen (6) in die Rinnen (6) eingepresst werden.

5. Herstellungsverfahren nach Anspruch 4, **dadurch gekennzeichnet , dass** die Zähne (4) auf dem Basiselement (3) kreisförmig um eine Symmetrieachse (11) des Wirkelements (1) herum verteilt angeordnet sind und dass die Rinnen (6) parallel zur Symmetrieachse (11) verlaufen.

6. Herstellungsverfahren nach Anspruch 5, **dadurch gekennzeichnet , dass** die Aufweitelemente (10) für alle Zähne (4) auf einem gemeinsamen Ergänzungselement (12) des Wirkelements (1) angeordnet sind und dass die in Bezug auf die Symmetrieachse (11) radial inneren Enden der Aufweitelemente (10) von der Symmetrieachse (11) einen größeren Abstand aufweisen als die in Bezug auf die Symmetrieachse (11) radial äußeren Enden der Spulenträger (7).

7. Herstellungsverfahren nach Anspruch 5, **dadurch gekennzeichnet , dass** die Aufweitelemente (10) mittels eines die Symmetrieachse (11) radial umgebenden Abschlusselements (12') des Wirkelements (1) in die Rinnen (6) der Zähne (4) eingepresst werden.

8. Herstellungsverfahren nach einem der obigen Ansprüche, **dadurch gekennzeichnet , dass** das Wirkelement (1) als Stator (1) der elektrischen Maschine ausgebildet ist.

9. Elektrische Maschine,
- wobei die elektrische Maschine zwei miteinander zusammenwirkende Wirkelemente (1, 2) aufweist,
- wobei ein magnetisch wirksames Basiselement (3) eines der Wirkelemente (1, 2) eine Anzahl von Zähnen (4) aufweist, die jeweils zwei äußere Zahnflanken (5) und zwischen den äußeren Zahnflanken (5) jeweils eine V-förmige Rinne (6) aufweisen,
- wobei auf mechanisch stabile Spulenträger (7) jeweils ein Spulenelement (9) der elektrischen Maschine gewickelt ist,
- wobei die Spulenträger (7) einschließlich der auf die Spulenträger (7) gewickelten Spulenelemente (9) jeweils auf einen der Zähne (4) des Basiselements (3) aufgesteckt sind,
- wobei in die Rinnen (6) jeweils ein Aufweitelement (10) eingepresst ist, durch das die Zähne (4) aufgeweitet sind,
- wobei die äußeren Zahnflanken (5) der Zähne (4) an den Zähnen (4) zugewandten Innenseiten (8) der Spulenträger (7) anliegen.

10. Elektrische Maschine nach Anspruch 9, **dadurch gekennzeichnet , dass** die den Zähnen (4) zugewandten Innenseiten (8) der Spulenträger (7) parallel zueinander verlaufen.

11. Elektrische Maschine nach Anspruch 9 oder 10, **da** - **durch gekennzeichnet** , dass die Zähne (4) auf dem Basiselement (3) kreisförmig um eine Symmetrieachse (11) des Wirkelements (1) herum verteilt angeordnet sind und dass die Rinnen (6) parallel zur Symmetrieachse (11) verlaufen.

12. Elektrische Maschine nach Anspruch 11, **dadurch gekennzeichnet , dass** die Aufweitelemente (10) für alle Zähne (4) auf einem gemeinsamen Ergänzungselement (12) des Wirkelements (1) angeordnet sind und dass die in Bezug auf die Symmetrieachse (11) radial inneren Enden der Aufweitelemente (10) von der Symmetrieachse (11) einen größeren Abstand aufweisen als die in Bezug auf die Symmetrieachse (11) radial äußeren Enden der Spulenträger (7).

13. Elektrische Maschine nach Anspruch 11, **dadurch gekennzeichnet , dass** die Aufweitelemente (10) mittels eines die Symmetrieachse (11) radial umgebenden Abschlusselements (12') des Wirkelements (1) in die Rinnen (6) der Zähne (4) eingepresst sind.

14. Elektrische Maschine nach einem der Ansprüche 9 bis 13, **dadurch gekennzeichnet , dass** das Wirkelement (1) als Stator (1) der elektrischen Maschine ausgebildet ist.
